Europäisches Patentamt

European Patent Office

Office européen des brevets

(19)

(11) EP 1 677 099 A1

(12) EUROPEAN PATENT APPLICATION

(43) Date of publication:
05.07.2006 Bulletin 2006/27

(51) Int Cl.:
G01N 21/94 (2006.01)

(21) Application number: 04031021.1

(22) Date of filing: 30.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: Danmarks Tekniske Universitet
2800 Lyngby (DK)

(72) Inventors:
• Blanke, Mogens
3520 Farum (DK)
• Braithwaite, Ian David
2200 Kopenhagen N (DK)

(74) Representative: Gregersen, Niels Henrik et al
Patrade A/S
Fredens Torv 3A
8000 Aarhus C (DK)

(54) Method and apparatus for classification of surfaces

(57) A method for optically determining whether a region of a surface is clean or contaminated. The method finds applicability in connection with cleaning robots, for example in pig house cleaning. It comprises the steps of

- selecting a first and a second, different narrow band of wavelengths for illuminating the region,
- selecting a first class with two-dimensional values (X1, Y1) which corresponds to a clean region and a second class with two-dimensional values (X2, Y2) which corresponds to a contaminated region, where X1 and X2 are values for the reflectance from the region at the first band, and Y1 and Y2 are values for the reflectance from the region at the second band,

- illuminating the region with light having the first narrow band of wavelengths and illuminating the region with light having the second narrow band of wavelengths,
- measuring the reflected light from the region at the first and the second band to determine the respective reflectance values R1 and R2,
- assigning the two-dimensional value (R1, R2) to the first class, if there exist a value (X1, Y1)=(R1, R2) and assign the two-dimensional value (R1, R2) to the second class, if there exist a value (X2, Y2)=(R1, R2).

FIG. 1

**Description**

FIELD OF THE INVENTION

The invention relates to optical methods for determining whether a surface is clean or dirty, preferably in connection with an automated robot cleaning process.

BACKGROUND OF THE INVENTION

Manual cleaning of livestock buildings, using high pressure cleaning technology, is a tedious and health threatening task conducted by human labour in intensive livestock production. To remove this health hazard, recent development has resulted in cleaning robots, some of which have been commercialised. The working principle of these robots is to follow a pattern initially taught to them by the operator. Experience shows that cleaning effectiveness is poor and utilisation of detergent and water is higher than for manual cleaning. Furthermore, robot cleaning entails subsequent manual cleaning as robots in many cases are unable to detect the cleanliness of surfaces.

An inspection system for the control of surfaces of teats before milking of cows has been described by Bull et al. in "Optical teat inspection for automatic milking system" published in Computers and Electronics in Agriculture 12 (1995) 121-130. It was found that the ratio of reflectance at a wavelength in the chlorophyll absorption band and a closely adjacent reference wavelength gave an indication of whether the teat was clean or not. This is due to the fact that manure, which is the typical dirt on teats, contains chlorophyll. However, as pointed out in this article, this method has a number of general shortcomings, as it is not a useful test of cleanliness of black teats. furthermore, the method relies on the fact that chlorophyll is part of the contamination. However, in the case of contamination in pighouses, this is not the case, as pigs are not fed with chlorophyll containing food.

**DESCRIPTION / SUMMARY OF THE INVENTION**

It is the purpose of the invention to provide an optical method for the clear distinction between a dirty and a clean surface.

This purpose is achieved by a method according to the invention for optically determining, whether a region of a surface is clean or contaminated. The method comprises a number of steps as described in the following. A first and a second, different narrow band of wavelengths for illuminating the region are selected. This selection is made such that a good differentiation can be found between a contaminated and a clean surface. How this is done in practice is explained below. A first class with two-dimensional values $[X1, Y1]$ is selected for defining a clean state, where $X1$ is a value for reflectance from the region as it is expected if the region is in a clean state and when illuminated at the first band, whereas $Y1$ is a value for reflectance if the region is in a clean state and when illuminated at the second band. Correspondingly a, disjunct, second class with two-dimensional values $[X2, Y2]$ is selected for defining a contaminated state, where $X2$ and $Y2$ are values for the reflectance as they are expected if the region is in a contaminated state and when illuminated at the first and second band, respectively. In practice, the region is successively illuminated with light having the first narrow band of wavelengths and with light having the second narrow band of wavelengths and the reflected light is measured from the region at the first and the second band. By measuring the actually reflected light, the respective reflectance values $R1$ and $R2$ in the first and the second wavelength band are determined. From the actually measured reflectance $R1$, and $R2$, a two-dimensional value $[R1, R2]$ can be assigned to the first class, if there exist a value $[X1, Y1]$ that is equal to $[R1, R2]$ and to the second class, if there exist a value $[X2, Y2]$ that is equal to $[R1, R2]$.

By this method, it is possible to make a clear distinction between a clean and a contaminated region on a surface. As the reflectance from the region may vary, for example due to inhomogeneous distribution of contamination in the region, using only one wavelength leads to a rather unsafe determination of, whether the region is clean or not. However, by selecting and using another wavelength in combination, the uncertainty can be reduced to a very low level. It should also be noted that the method and apparatus according to the invention work polariser-free, thus, it is not necessary to use any kind of polarising equipment in order to use the invention.

How the term narrow for the wavelength band is used in contrast to white light, and how it has to be understood depends on the application. The wavelength band should be much narrower than the wavelength distance between the bands. When using diodes for illumination, typical bandwidths are some tens of nm, which has proven to be feasible. If the band is relatively broad, the resolution may not be sufficient.

In a certain practical embodiment, the invention may include image acquisition with an optoelectronic system of the surface that contains the possibly contaminated region and subsequent image processing. The image of the surface may then be acquired in sections by moving the optoelectronic system with respect to the surface. For example, by using a CCD camera or a video camera, the image section is divided into a multiplicity of pixels forming an image matrix and each pixel is assigned a signal value representative for the reflected light from the corresponding region.

This signal value is then evaluated in order to find the quantitative values for the reflection. The size of a region can be chosen in accordance with the desired optical resolution for the contamination on the surface. For example, the region may be chosen to have a segment area of 2 mm x 2 mm. Though the invention is preferably used in connection with a video camera or CCD camera, it is within the scope of the invention to use light detectors that only investigate one region at a time.

For defining the classes, a probability density X as a function for the reflectance from the region at the first band and a probability density Y as a function for the reflectance from the region at the second band may be determined. In a two-dimensional representation with the reflectance values of X as ordinate and Y as coordinate, the classes may be found by selecting a border between two groups of entrances, where one group is representative for a clean region and the other group is representative for a contaminated region.

The degree of reduction of the uncertainty depends in many cases on the selection of the two-dimensional values for the first and the second class. According to the invention, the selection of the first and the second band of wavelengths may involve calculation of the Jeffreys-Matusita distance for reflectance probabilities for a range of first wavelength bands and a range of second wavelength bands. With this at hand, a combination of the first and the second wavelength band may be selected for which the JM distance is above a predetermined value, for example above 0.8, above 1.0 or above 1.2. The maximum value of the Jeffreys-Matusita distance is the square root of 2.

Alternatively, one may calculate an upper bound for a misclassification error for reflectance probabilities for a range of first wavelength bands and a range of second wavelength bands and select a combination of the first and the second wavelength bands for which the upper bound of the misclassification error is below a predetermined value. Such a predetermined value may be 10%, 5% or even as low as 2%. The lower the value, the lower is the potential for misclassification. When using the Jeffreys-Matusita distance JM, such an upper bound can be defined as $1-\frac{1}{2}JM^2$.

The selected wavelength may be found according to the surface to be investigated. For example, the first band may be around 800 nm and the second band around 650 nm in order to determine the cleanliness of concrete. Alternatively, the first band may be around 650 nm and the second band around 450 nm in order to determine the cleanliness of steel. These wavelengths are only advantageous examples and not limiting the invention, as other wavelength bands may be used with a satisfactory result.

Different surfaces typically influence the result of the measurements. Thus it is advantageous, if the selection of the first and the second band is dependent on the surface material in the region. For some surfaces, for example if a number of different materials such as steel, polymer and concrete are involved, differentiation may be difficult even with two wavelengths. In this case, the method of the invention can be used to extend with one or more further wavelength bands in an analogous way. According to the invention, the method may comprise selecting a third narrow wavelength band in addition, selecting a first class with three-dimensional values [X1, Y1, Z1] which corresponds to a clean region and a second class with three-dimensional values [X2, Y2, Z2] which corresponds to a contaminated region, where Z1 and Z2 are values for the reflectance from the region at the third band. The region is illuminated in addition with light having the third band, and the reflected light from the region at the third band is measured to determine the respective reflectance R3. Analogous to the description above, a three-dimensional value [R1, R2, R3] is assigned to the first class, if there exist a value [X1, Y1, Z1] that equals [R1, R2, R3], and the three dimensional value [R1, R2, R3] is assigned to the second class, if there exist a value [X2, Y2, Z2] that equals [R1, R2, R3].

In a practical embodiment for the method above, an apparatus may be used comprising an illuminator for illumination with the first wavelength and the second wavelength and a digital video camera electronically coupled to a computer for measuring the reflected light with a spatial resolution. The camera may advantageously be arranged to detect the reflected light under conditions minimising the direct reflection from the surface of the region. For example, the camera may receive the light reflected in a direction normal to the surface, whereas the illumination is in an angle of 45 degrees with the surface.

Such a method and apparatus may be used for a cleaning robot for performing the method described. In a specific embodiment, the cleaning robot comprises a vehicle onto which at least one robot arm is mounted, and wherein an illuminator for illuminating the region with light having the first narrow band of wavelengths and illuminating the region with light having the second narrow band of wavelengths is mounted on a robot arm and wherein a camera for measuring the reflected light from the region at the first and the second band is mounted on a robot arm. For example, the invention may include the use of a commercially available robot, for example one from the company Alto, which has been modified in connection with the invention as described below.

The method according to the invention may be used for assessing the success of cleaning procedures on contaminated surfaces by using an optoelectronic system for image acquisition, image processing and image representation. The aim is to achieve an assessment which is current and quantitative. This is ensured in terms of process engineering owing to the fact that the image of the surface to be assessed is acquired in sections, that the image section is divided into a multiplicity of pixels forming an image matrix of pixels, where each pixel represents a region that is to be examined. The method has initially been developed for automatic cleaning of animal houses, especially pig houses, but the invention is of general nature and may be used in connection with other applications as well, for example cleaning of slaughterhouses or other industrial environments in general.

SHORT DESCRIPTION OF THE DRAWINGS

The invention will be explained in more detail with reference to the drawings, where

FIG. 1  is a sketch of a set-up for measuring reflection from a surface region,
FIG. 2  shows Prior Art results on the reflectance of the different materials as measured with a spectrometer,
FIG. 3  shows the Prior Art results for clean and for contaminated samples with mean and $\pm 1$ and $\pm 2$ standard deviations,
FIG. 4  shows probability density distributions obtained at two different wavelengths for clean and dirty regions,
FIG. 5  is a two-dimensional combination of the probability densities of Figure 4,
FIG. 6  is a spectrum illustrating JM distance for a range of wavelength pairs using actual data for concrete,
FIG. 7  is a contour plot for the misclassification bound in the range 0 - 10%,
FIG. 8  is a spectrum for the classification error upper bound for aged solid concrete floor,
FIG. 9  shows a spectrum for the classification error upper bound for aged slatted concrete floor, FIG. 9a for two wavelengths and FIG. 9b for three wavelengths,
FIG. 10  shows scatter plots, FIG. 10 a for wavelengths 800nm vs. 650 nm and FIG. 10b for wavelengths 650nm vs. 450 nm,
FIG. 11  is a flow diagram for the software implementation,
FIG. 12  shows results of the algorithm used on images from a pig pen,
FIG. 13  shown a hardware implementation in a robot,
FIG. 14  is a cleanness map obtained from measurements in a pig pen.

**DETAILED DESCRIPTION / PREFERRED EMBODIMENT**

Vision model

The basic elements in a vision-based measurement system consist of three components: illumination system, subject and camera. The complexity of the system is to a large degree determined by the extent to which the relative placement of the three can be controlled and constrained. Particularly in the case of illumination, control is often critical — external (stray) light can be a seriously limiting factor for system effectiveness.

The light collected by a camera lens is determined by the colour of the viewed object, the spectra of the illuminating light sources and the relative geometries of these to the camera. The influence of geometry on measured colour can be seen clearly with reflective materials: when viewed such that a light source is directly reflected in a surface, the reflected light is almost entirely determined by the light source rather than by the reflecting material. Since this behaviour makes measurement of surface colour impossible, measurement systems attempt to avoid this geometry.

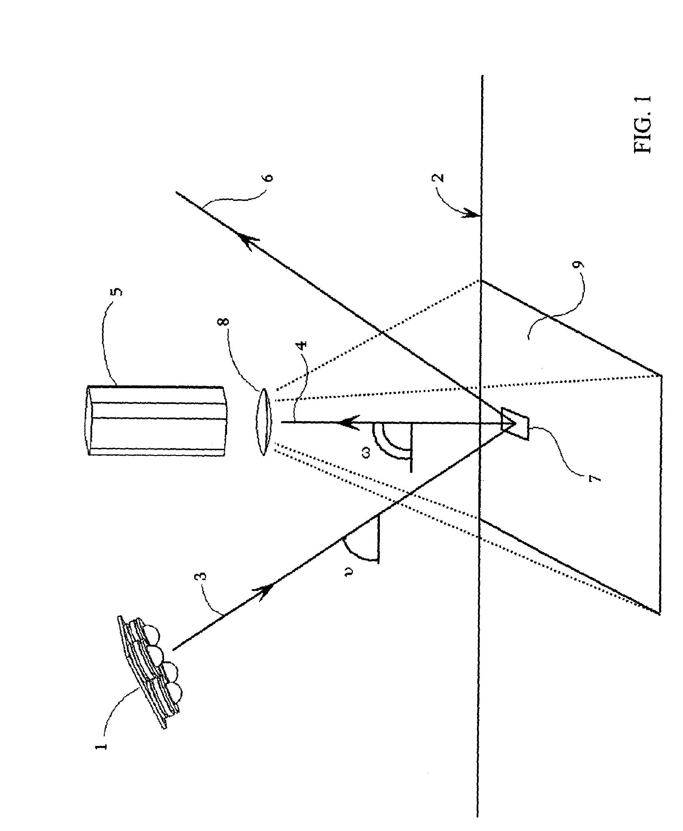

FIG. 1 illustrates a set-up that may be used in connection with the invention. An illuminator 1 illuminates a surface 2 with a light 3 under a certain angle v, for example 45°. A detector, in this case a camera 5, receives reflected light 4 under an angle w, for example 90° in order to avoid directly reflected light 6. The size of the region 7 to be investigated depends on the optical geometry including distances, angles and lenses 8. The image of a surface acquired in sections, where an image section 9 is divided into a multiplicity of pixels forming an image matrix of pixels, where each pixel represents a region 7 that is to be examined. Thus, with a CCD camera connected to a computer, a large number of regions, one region per pixel can be investigated very fast by employing computer techniques. As an illuminator 1, light diodes have been used with success. These have typically light emission within a narrow frequency band. The illuminator 1 is shown with four diodes, each diode having a different wavelength, where the wavelengths are selected in order to achieve a good discrimination between the contaminated and the clean state. In order to avoid shadow effects, illumination may be performed with more than one illuminator, for example with two illuminators located oppositely with respect to the camera.

If direct reflections can be avoided, the light reaching a viewer can be considered to be independent of the measurement system geometry. In this case, the spectrum of the light 4 entering the camera 5 is simply a function of the spectra of the light sources 1 and the colour of the material being viewed on the surface 2. Uniform (homogeneous) materials have single colour, while composite (inhomogeneous) materials may have varying colours across the surface 2. If a single pixel in the camera is focused on an region 7 with area $\Delta$ of material, then the spectrum of the light incident on the pixel is given by

$$s(\lambda) = \int_\Delta c(\lambda, a)\, i(\lambda)\, da$$

where c is the surface colour as a function of wavelength $\lambda$ and position, and *i* is the spectrum of the illuminating light. Surface colour is specified as the amount (fraction) of light reflected by the surface, relative to a standard reference surface. The camera pixel itself has a wavelength dependent sensitivity across some range of wavelengths. For a CCD camera, this sensitivity ranges over wavelengths from just into the ultraviolet up to the near-infrared. Further, pixel characteristics can be modified by the addition of a colour filter, to limit sensitivity to certain wavelengths. The electrical current $I_i$ induced in a single pixel is therefore be given by

$$I_i \propto \int_\Lambda s(\lambda)\, f_i(\lambda)\, \eta(\lambda)\, d\lambda$$

where $f_i$ is the filter characteristic, giving the fraction of the light transmitted by the filter, and $\eta$ is the CCD sensitivity.

In addition to choosing the characteristics of a filter, the sensor designer also has some control over the subject illumination. The illumination term i in the equation above-consists of background illumination together with light sources integrated into the sensor system. So i consists of two terms

$$i(\lambda) = i_B(\lambda) + i_i(\lambda)$$

where the first term represents a disturbance and the second term a design parameter. The subscripts i in the equations above indicate that the sensor operates with a number of *channels,* consisting of light source and filter pairs. Thus, a sensor pixel measurement consists of a vector of readings, one for each channel.

$$x = (I_1 \ \ldots \ I_p)$$

Finally, all the image pixels can be assembled into an image array, giving a single camera measurement the form

$$X = \begin{bmatrix} x_{11} & \cdots & x_{w1} \\ \vdots & \ddots & \vdots \\ x_{1h} & \cdots & x_{wh} \end{bmatrix}$$

where w and *h* are the width and height of the image in pixels, respectively.

### Properties of clean and dirty surfaces

How to catch the cleanness information on the different types of surfaces is the major issue in design of an intelligent sensor. One of the hypotheses is that the reflectance of building materials and contamination differs in the visual or the near infrared wavelength range. To validate the hypotheses, the optical properties of surfaces to be cleaned in a pighouse and the different types of dirt found in finishing pig units were investigated in the VIS-NIR optical range. For validation, an ordinary CCD camera with selected filters or defined light sources can be used for cleanness detection.

Measurements were conducted in a laboratory to gain the necessary knowledge on spectral characteristics of different surface materials inside pig buildings. The selected housing elements of inventory materials were taken from a pig production building after 4-5 weeks in real environment in pig pens. In all, four surface materials were considered:

concrete, plastic, wood and metal, in each of four conditions: clean and dry, clean and wet, dry with dirt and wet with dirt. In each measurement condition, spectral data were sampled at 20 randomly determined positions, in order to avoid the effect caused by the non-homogeneous properties of the measured surfaces. At each measurement position, spectral outputs were sampled 5 times with an integration time of 2 seconds for each. The average of the five spectra was recorded for analysis.

The spectrometer used in the characterisation was a diffraction grating spectrometer, incorporating a 2048 element CCD (charge-coupled device) detector. The spectral range 400-1100 nm was covered using a 10 $\mu$m slit, giving a spectral resolution of 1.4 nm. The light source used was a Tungsten-Krypton lamp with a colour temperature of 2800K, suitable for the VIS/NIR applications from 350-1700 nm.

A Y-type armoured fibre optic reflectance probe, with six illuminating fibres around one read fibre (400 $\mu$m) specified for VIS/NIR was used to connect the light source, the spectrometer and the measurement objective aided with a probe holder. The probe head was maintained at 45° to the measured surface and a distance of 7mm from the surface.

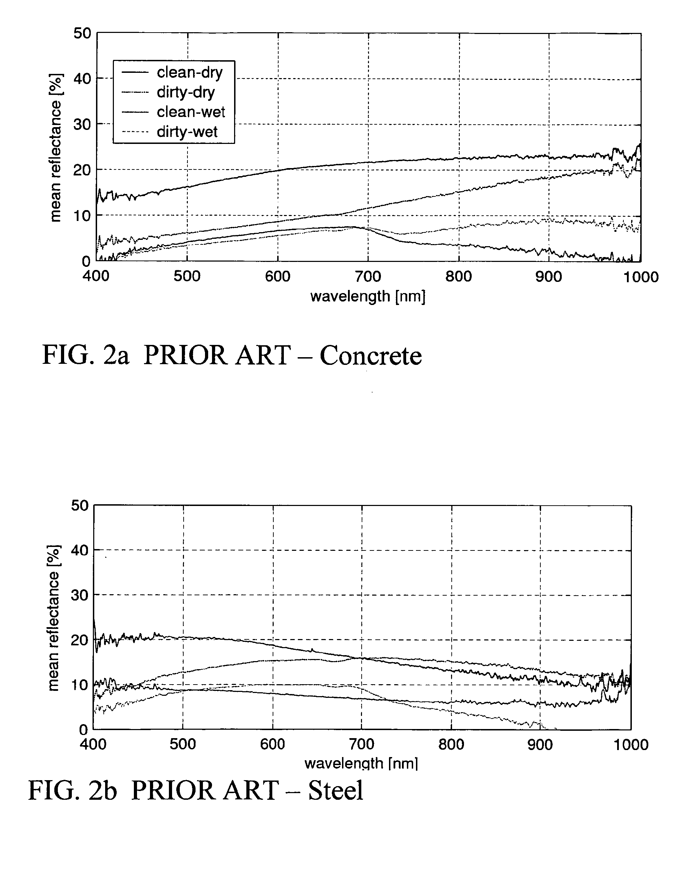

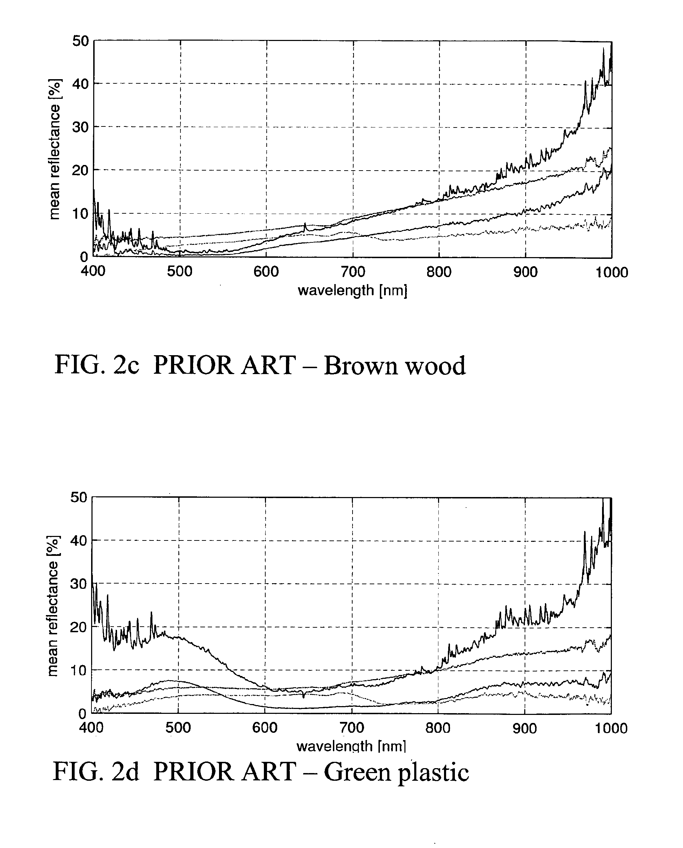

Published by G. Zhang. and J. S. Strøm "Spectral signatures of surface materials in pig buildings" in Proc. of International Symposium of the CIGR "New trends in farm buildings", Evora, Portugal. Proc. CD-fb2004, 316 are primary results on the reflectance of the different materials under the measurement conditions are shown in Figures 2(a)-2(d). The curves show the data from the 20 random measurement points under each measurement set-up where the four curves in each spectrum correspond to conditions that are clean-dry, dirty-dry, clean-wet and dirty-wet.

The spectral analysis system has its highest sensitivity in the range 500 to 700 nm, but the entire range from 400 to 1000 nm is useful to provide reflection as function of wavelength. The results suggest that it will be able to make discrimination and hence classify areas that are visually clean. A scenario with multi-spectral analysis, combined with appropriate illumination or camera filters has therefore been pursued.

Concrete, the predominant material used for floors, is an inorganic material. The manure and the contaminants may thus be spotted as organic material on inorganic background. Under wet condition, a significant difference may be seen in wavelengths of 750-1000 mn, Figure 2a. However, the clear differences for steel (stainless) are shown in 400-500 and 950-1000 nm, Figure 2b. For the brown wood sheet, the reflectance under dirty-wet conditions was higher in the wavelengths of 500-700 nm and lower in 750-1000 nm compared with clean-wet conditions. For the green plastic sheet, the reflectance under dirty-wet condition was lower for wavelengths lower than 550 nm and higher than 800 nm, but higher in wavelength between 600-700 nm compared with clean-wet condition.

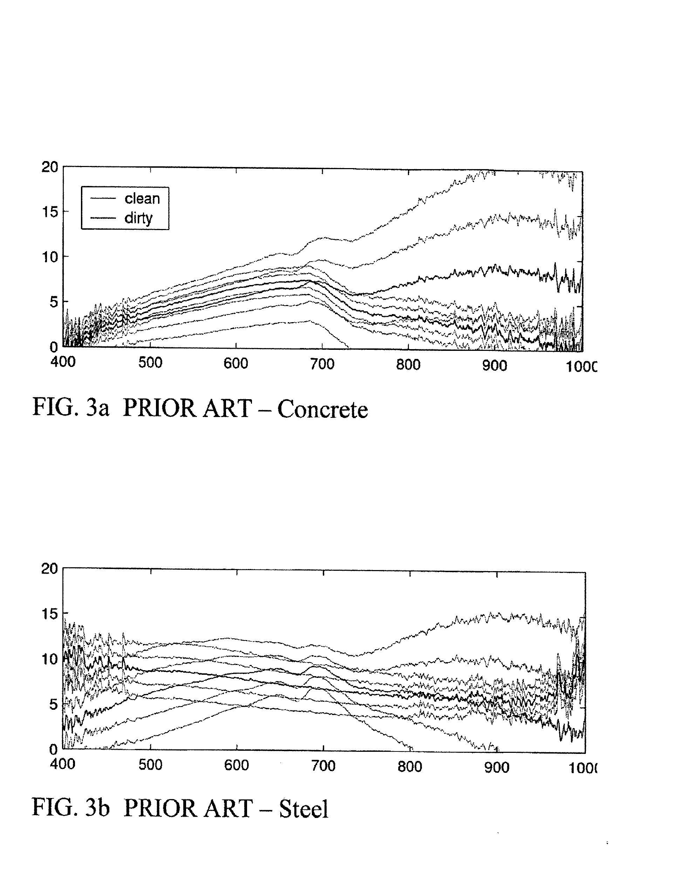

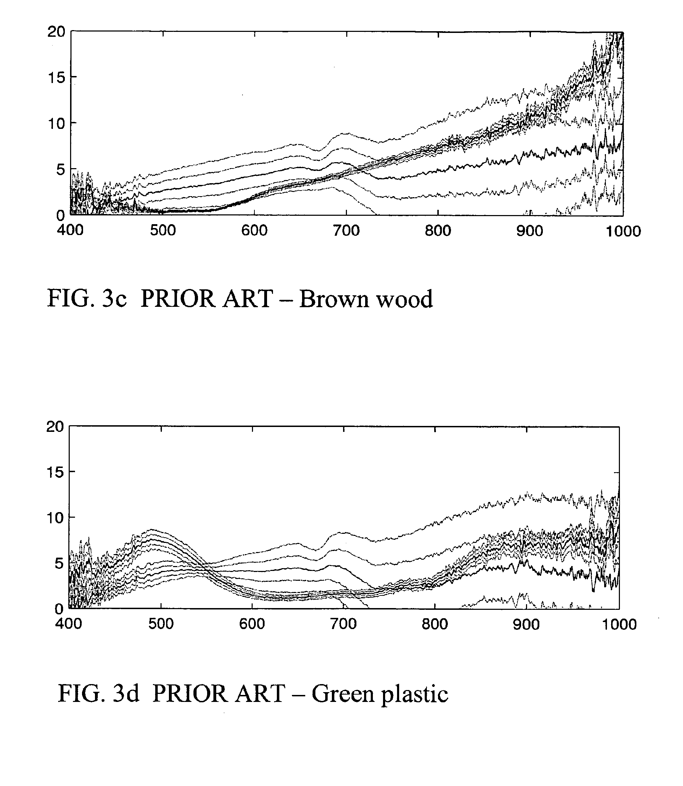

The measurements of the reflection vary statistically, which is illustrated in Figure 3a-3d where the measurements for clean-dry and dirty-dry are shown with their mean value and $\pm 1$ and $\pm 2$ standard deviations. These measurements are published by by G.

Zhang. and J. S. Strøm "Spectral signatures of surface materials in pig buildings" in Proc. of International Symposium of the CIGR "New trends in farm buildings", Evora, Portugal. Proc. CD-fb2004, 316.

Classification

Classifying an object is the process of taking measurements of some of the objects properties, and based on these measurements assigning it to one of a number of classes. In pixel-based visual classification, each class represents a colour, or range of colours. For a standard colour video camera, each pixel measurement contains three intensities: one each for red, blue and green.

Choosing the "most likely" class for a pixel using Bayesian classification uses the statistical properties of each class to compute the likelihood of a measurement belonging to each class. The classification is then that class with the greatest (post priori) likelihood. The statistical properties of classes are normally not known exactly in advance. These are therefore estimated based on measurements of previously classified objects.

Classification of a surface part as clean or not clean has obvious consequences in the application, for example where the invention is used in connection with automated cleaning of industrial environments or in farming environments such as pig houses. For the clean surface, misclassification as not clean will call for another round of cleaning by the robot. Misclassification of the unclean surface as clean has consequences for the quality of the cleaning result. Subsequent manual inspection and cleaning should be avoided if possible, but it could be acceptable for a user to have certain areas characterised as uncertain, as long as these do not constitute a large part of the total area to clean.

With a clear relation between cost and the probability of misclassification, methods to extract features of the observed spectra would be preferred, that could minimise the probability of misclassification, constrained by the complexity of the vision system.

In our context, the number of frequency bands to be analysed has an impact on both cost of computer-vision equipment and time needed to capture and analyse the pictures taken. Several classical methods exist that provide measures of misclassification and separability between the clean and unclean cases.

Let a frequency band in the spectrum be chosen for analysis. A set of measurements on a surface will have a distribution of reflectivity due to differences in the clean surface itself and due to the uneven distribution of residues to be cleaned. Let the distribution function for an ensemble of measurements given the case is $\theta_i$ (clean or not clean):

$$f(r|\theta_i) = f_i(r)$$

A convenient first assumption for analytical discussion is that the population has a multivariate normal distribution of dimension n,

$$f_i(r) = N(\mu_i, \Sigma_i)$$
$$= \frac{1}{\sqrt{2\pi}^n \sqrt{\det \Sigma_i}} \exp(-\frac{1}{2}(r - \mu_i)^T \Sigma_i^{-1}(r - \mu_i))$$

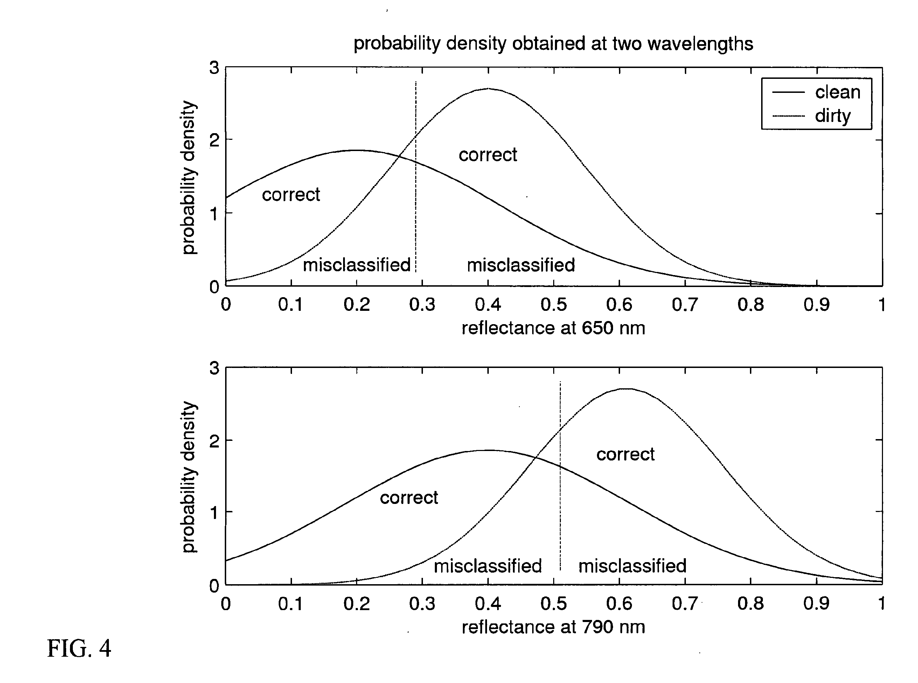

With two such distributions for the clean and unclean cases, respectively, the problem is to determine, from one or more measurements of reflectance, whether a given measurement represents a clean or an unclean area. This is illustrated in Figure 4 showing the probability density distributions for reflectance of clean and dirty regions at a narrow wavelength band around 650 nm in the upper spectrum and at a narrow wavelength band at 790 nm in the lower spectrum. For each spectrum, a measurement would be characterised as representing a clean area when reflectance is below the vertical, dashed borderline between the two distributions. Figure 4 also shows the probability for misclassification. In signal processing, measurement noise is often the prime source of misclassification and repeated measurements would be used to increase the likelihood that the right decision is made.

When noise is the prime nuisance, optimisation based on the Kullbak divergence may be used, e.g. in a symmetric version of the divergence,

$$D_{ij} = E\left\{\ln \frac{f_i(r)}{f_j(r)}|\theta_i\right\} + E\left\{\ln \frac{f_j(r)}{f_i(r)}|\theta_j\right\}$$

as explained in T. Kailath: "The divergence and Bhattacharyya distance measures in signal selection." *IEEE Transaction on Communication Technology,* com-15(1):52-60, February 1967.

According to the invention, however, the primary source of uncertainty is the fact that reflectance of the background material and of the contamination will vary as a function of where we measure, i.e. it is a function of location and not of time. Therefore, it is necessary to find a technique by which the probability of misclassification $P_e$ is minimised using a single measurement only.

If the divergence measure is used it is possible to give a lower bound and an upper bound, see for T. Kailath: "The divergence and Bhattacharyya distance measures in signal selection" *IEEE Transaction on Communication Technology,* com-15(1):52-60, February 1967 or J. Lin: "Divergence measures based on the Shannon entropy" *IEEE Transaction son Information Theory,* 37(1):145-151, January 1991.

With reference to the article by Kameo Matusita: "A distance and related statistics in multivariate analysis", published in P. R. Krishnaiah, editor, *Multivariate Analysis,* pages 187-200. Academic, Press, New York, 1966, the Jeffreys-Matusita distance (JM distance) between distributions $f_i$ and $f_j$, is [6]

$$J_{ij} = \left(\int_\Omega \left(\sqrt{f_i(r)} - \sqrt{f_j(r)}\right)^2 dr\right)^{\frac{1}{2}}$$

A salient feature of the JM distance is its applicability to arbitrary distributions. The JM distance is $J_{ij} = 0$ when the distributions $f_i(r)$ and $f_j(r)$ are equal. The JM distance takes the value $J_{ij} = \sqrt{2}$ when the two distributions are totally separated.

Bhattachatyya introduced the coefficient

$$\rho_{ij} = \int_{\Omega} \sqrt{f_i(r)} \sqrt{f_j(r)}\, dr$$

and used the negative logarithm, $\alpha_{ij}$, of this quantity,

$$\alpha_{ij} = -\ln \rho_{ij}.$$

These have the obvious relation to the JM distance

$$J_{ij}^2 = 2(1 - \rho_{ij}) = 2(1 - e^{-\alpha_{ij}})$$

In T. Kailath: "The divergence and Bhattacharyya distance measures in signal selection" *IEEE Transaction on Communication Technology,* com-15(1):52-60, February 1967 it is shown that when the two distributions are normal multivariate of degree

$$n: f_i(r) = N(\mu_i, \Sigma_i) \text{ and } f_j(r) = N(\mu_j, \Sigma_j)$$

then

$$\alpha_{ij} = \frac{1}{8}(\mu_i - \mu_j)^T \Sigma_{ij}^{-1}(\mu_i - \mu_j) + \frac{1}{2}\ln \frac{\det(\Sigma_{ij})}{\sqrt{\det \Sigma_i \det \Sigma_j}}$$

where

$$\Sigma_{ij} = \frac{1}{2}(\Sigma_i + \Sigma_j),$$

the probability of misclassification $P_e$ is bounded by

$$\frac{1}{8}\rho_{ij}^2 \leq P_e \leq \rho_{ij}$$

which is equivalent to

$$\frac{1}{8}(1 - \frac{1}{2}J_{ij}^2)^2 \leq P_e \leq 1 - \frac{1}{2}J_{ij}^2.$$

The lower bound of $P_e$ is reached when $J_{ij} = \sqrt{2}$

The JM distance measure will express the quality of a chosen technique to distinguish between the clean and not clean surface cases. The complete spectra presented above were obtained using a dedicated spectrometer. For commonplace computer-vision techniques to be applied, we need to limit the number of frequencies analysed.

Figure 4 illustrates the theoretic distribution of reflectance for the clean and not-clean cases if monochromatic light is used. The result is two normal distributions with a large overlap. If discrimination was based on a single wavelength, the area would correspond to misclassification given the surface was clean

$$P_e(\theta_d | \pi_c) = \int_{r_{sep}}^{1} p(r | \pi_c)\, dr$$

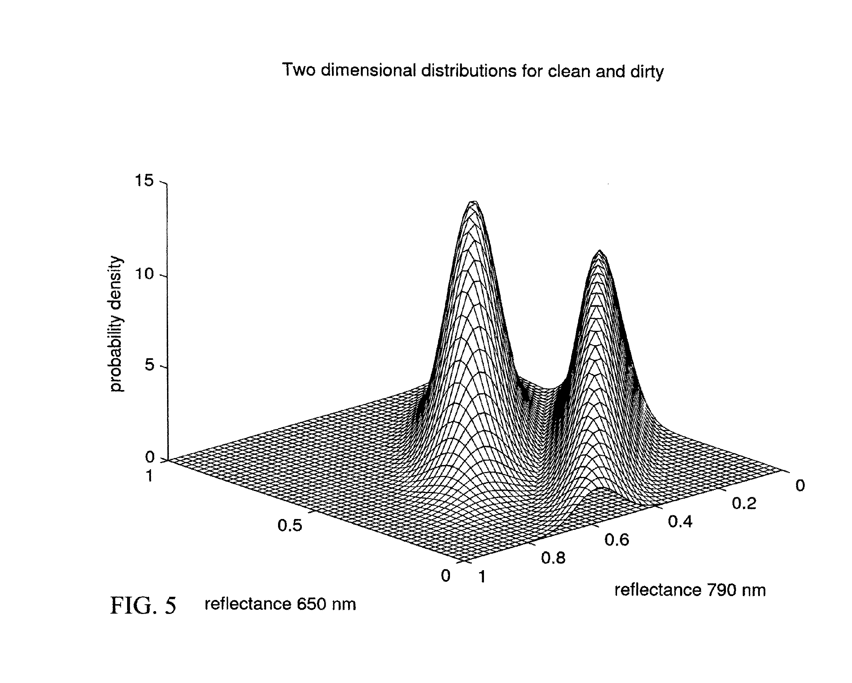

where $r_{sep}$ is shown as the dashed line in Figure 5.1. Misclassification that the dirty surface was declared clean is

$$P_e(\theta_c | \pi_d) = \int_{0}^{r_{sep}} p(r | \pi_d)\, dr.$$

Using monochromatic or narrow-band light at a single wavelength was found to give a rather large overlap between distributions and hence a large probability of misclassification for all wavelengths when the surface is made of concrete.

If two monochromatic measurements are used, a two-dimensional distribution may be constructed as shown in Figure 5. The two dimensions correspond to observing the reflectance of the surface at two different wavelength bands. The x-axis is reflectance obtained for band $\lambda_1$=790nm and the y-axis is that obtained for band $\lambda_2$=650 nm. Whereas misclassification is large if either of the two wavelength bands is used individually, combining the two observations results in the two dimensional probability distribution functions shown with clear separation between the clean state and the contaminated state. The curves shown in Figure 4 are the projections of the same distributions shown in Figure 5. Thus, by regarding the two measurements as a two-dimensional presentation, it is indeed possible to discriminate using a separation in the x-y plane of reflectance as the boundary for classification.

Example - misclassification bounds

This example details calculation of the misclassification bounds for the one and two-dimensional normal distributions shown in Figures 4 and 5.

The example demonstrates the benefit of treating the combined measurements as one vector measurement from a two-dimensional distribution that has correlation between its variables, in contrast to treating the two measurements as individual and uncorrelated, which they are not.

Let the two single wavelength observations be one-dimensional distributions $A : N (\mu_A, \Sigma_A)$ with mean and covariance specified for each of the wavelengths. The combined observation is $C : N(\mu_O \Sigma_C)$ where

$$
\begin{aligned}
A(\lambda_1): \quad & \mu_A = \mu_A(1) & \Sigma_A = \sigma_{A1}^2 \\
A(\lambda_2): \quad & \mu_A = \mu_A(2) & \Sigma_A = \sigma_{A2}^2 \\
C(\lambda_1, \lambda_2): \quad & \mu_C = \begin{bmatrix} \mu_A(1) \\ \mu_A(2) \end{bmatrix} & \Sigma_C = \begin{bmatrix} \sigma_{c11}^2 & \sigma_{c12}^2 \\ \sigma_{c12}^2 & \sigma_{c22}^2 \end{bmatrix}
\end{aligned}
$$

The covariance matrix for the distribution in the two dimensional case is calculated from the two single wave-

length variances $\sigma_{A1}$ and $\sigma_{A2}$ and the correlation between the two measurements. The correlation is conveniently specified as an angle $\phi$ that shows maximum correlation with $\phi = \pi/4$, none at $\phi = 0$ and $\phi = \pi/2$. Define a rotation matrix R by

$$\mathbf{R} = \begin{bmatrix} \cos\phi & \sin\phi \\ -\sin\phi & \cos\phi \end{bmatrix}$$

The covariance for the two-dimensional case is then calculated from $\sigma_{A1}$ and $\sigma_{A2}$ as

$$\Sigma_C = \begin{bmatrix} \sigma_{c11}^2 & \sigma_{c12}^2 \\ \sigma_{c12}^2 & \sigma_{c22}^2 \end{bmatrix} = \mathbf{R}^T \begin{bmatrix} \sigma_{A1}^2 & 0 \\ 0 & \sigma_{A2}^2 \end{bmatrix} \mathbf{R}$$

Parameters of the example shown in Figures 4 and 5 are listed in Tables 1, 2 and 3.

Table 1: Parameters for one-dimensional distributions at $\lambda_1$.

| parameter | A | B |
|---|---|---|
| $\lambda$ | 650 | 650 |
| $\mu$ | 0.20 | 0.40 |
| $\Sigma$ | $0.05^2$ | $0.20^2$ |

Table 2: Parameters for one-dimensional distributions at $\lambda_2$.

| parameter | A | B |
|---|---|---|
| A | 790 | 790 |
| $\mu$ | 0.40 | 0.61 |
| $\Sigma$ | $0.30^2$ | $0.06^2$ |

Table 3 : Parameters for two-dimensional distributions

| parameter | A | B |
|---|---|---|
| $\lambda$ | $\begin{bmatrix} 650 \\ 790 \end{bmatrix}$ | $\begin{bmatrix} 650 \\ 790 \end{bmatrix}$ |
| $\phi$ | $\pi/4$ | $-\pi/4$ |
| $\mu$ | $\begin{bmatrix} 0.20 \\ 0.40 \end{bmatrix}$ | $\begin{bmatrix} 0.40 \\ 0.61 \end{bmatrix}$ |
| $\Sigma$ | $\begin{bmatrix} 0.2149^2 & -0.2090^2 \\ -0.2090^2 & 0.2149^2 \end{bmatrix}$ | $\begin{bmatrix} 0.1476^2 & -0.1349^2 \\ -0.1349^2 & 0.1476^2 \end{bmatrix}$ |

As the distributions A and B are normal, Bhattacharyyar's coefficient $\alpha$ is

$$\alpha = \frac{1}{8} \left(\mu_A - \mu_B\right)^T \Sigma_{AB}^{-1} \left(\mu_A - \mu_B\right) + \frac{1}{2} \ln\left(\frac{\det \Sigma_{AB}}{\sqrt{\det \Sigma_A \det \Sigma_B}}\right)$$

where

$$\Sigma_{AB} = \frac{1}{2}(\Sigma_A + \Sigma_B)$$

The probability $P_e$ of misclassification has the bounds

$$\frac{1}{8} \exp\left(-2\alpha\right) \le P_e \le \exp\left(-\alpha\right)$$

Table 4 lists the results for the three cases. It is evident that combining the two measurements dramatically improves the misclassification probability using the parameters of this example. It is noted that the correlation was set to its maximum with the parameters chosen here.

Table 4 : Calculation of $\alpha$ and bounds for $P_e$ for three cases.

| case | $\alpha$ | $inf(P_e)$ | $sup(P_e)$ |
|---|---|---|---|
| $JM(A, B)$ for $\lambda_1$ | 0.612 | 0.037 | 0.54 |
| $JM(A, B)$ for $\lambda_2$ | 0.596 | 0.038 | 0.55 |
| $JM(A, B)$ for $\begin{bmatrix} \lambda_1 \\ \lambda_2 \end{bmatrix}$ | 3.499 | 0.0001 | 0.030 |

With this approach being promising, the formal approach in connection with the invention was to design a sensor system starting with choosing two wavelengths, or more, that together gave a desired low level of misclassification. Second, a method was needed to find the discriminator function to be used.

Choice of wavelength bands

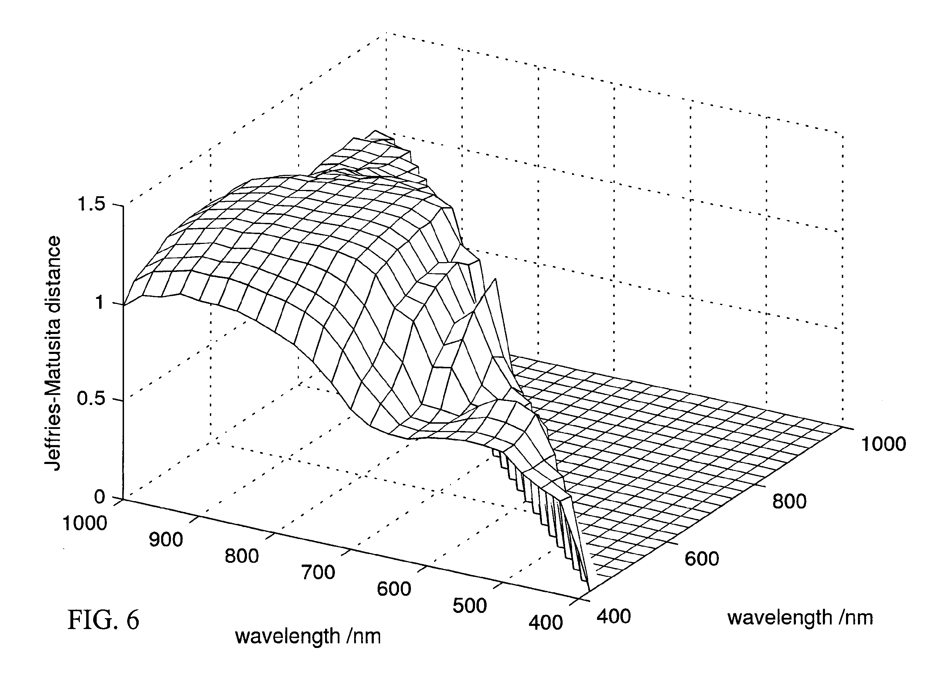

In connection with the invention, it was first investigated which pair of two frequency bands would be optimal based on minimising the probability of misclassification. This is equivalent to maximising the JM distance. Figure 6 shows the JM distance measure using actual data for concrete.

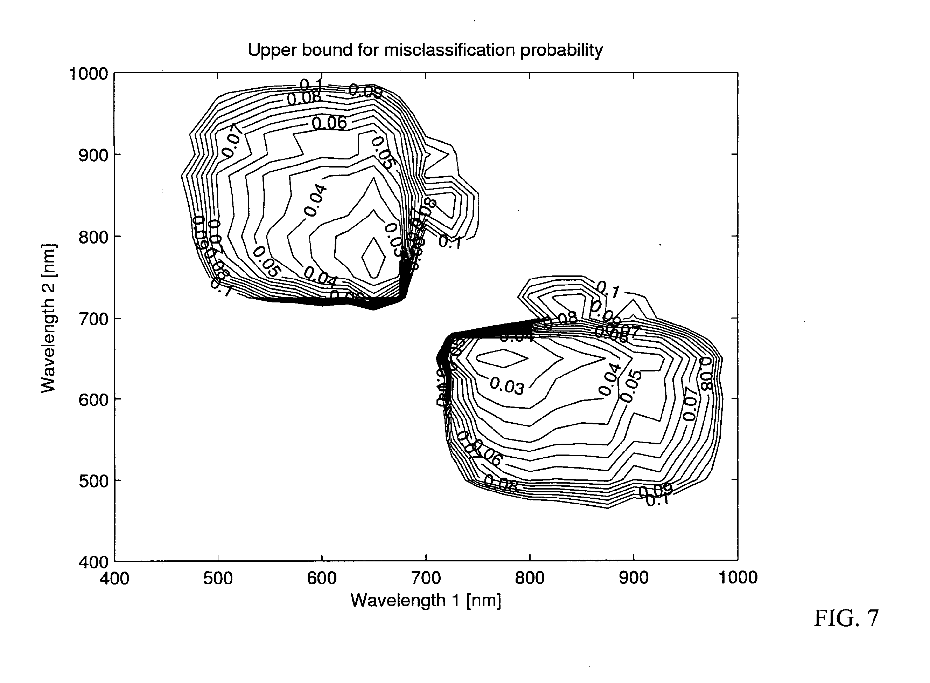

Figure 7 shows a contour plot for the misclassification bound in the range 0 - 10%. Using two narrow bands around wavelengths 780 nm (infrared) and 650 nm (orange) we obtain a misclassification probability below 2%, which is certainly acceptable for the application.

The results presented thus far, in Figure 6, showed an obtainable upper bound for misclassification to be acceptable when two specific wavelengths were used for illumination on concrete, another pair of wavelengths were needed for a steel surface.

The question whether two-wavelength discrimination would be possible for all relevant surface materials in a pig house was investigated using samples of a solid concrete and a slatted floor. Both samples had a history of 15 years of use. The surface colours of the aged materials were easily distinguished from those of samples from new build floors, the aged materials being clearly patinated into the brown range.

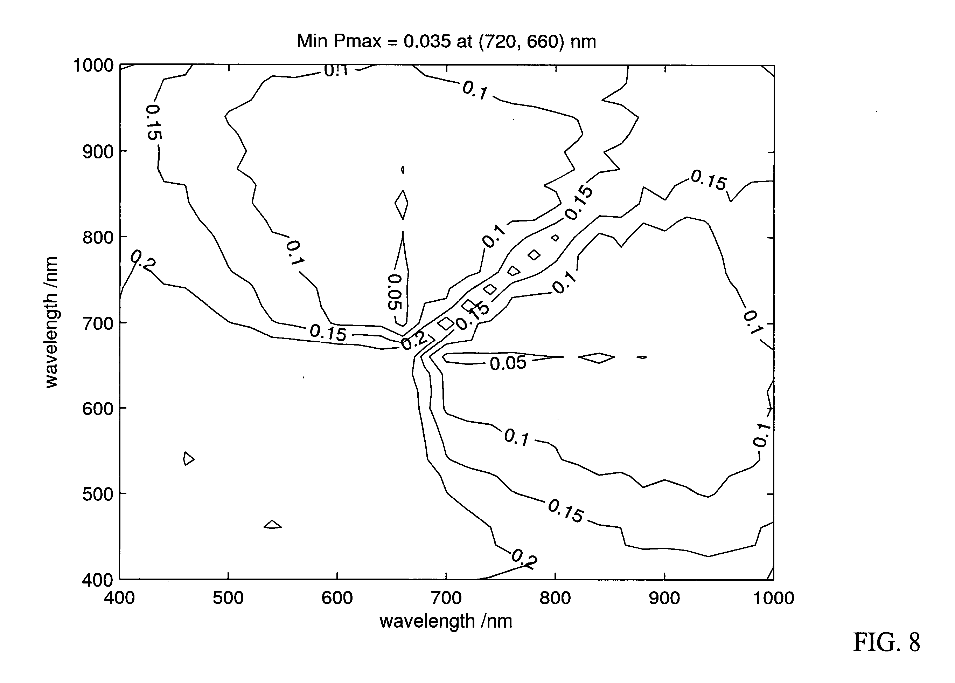

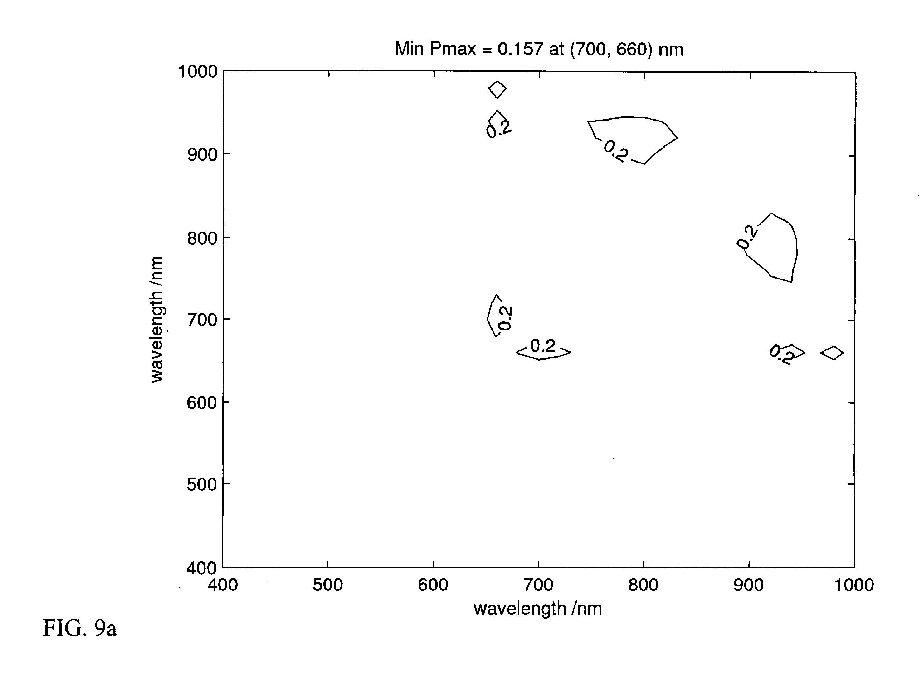

The results of running the JM tests on the aged materials are shown in Figure 8 for an aged solid concrete floor and Figure 9a for an aged slatted concrete floor. A two-wavelength discrimination was not suited with the slatted floor down to an acceptable level of misclassification. The next step natural step was to determine, whether use of additional wavelengths would improve the misclassification probability.

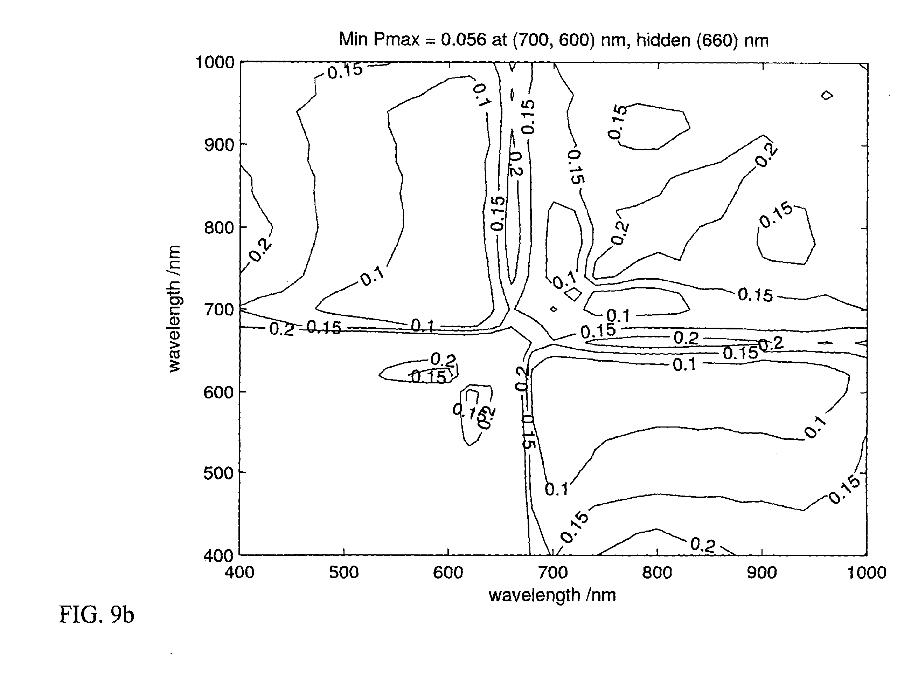

Obtaining a sufficiently low value of the upper bound for misclassification in the JM setting is an optimisation exercise. Whilst misclassification probability is expected to decrease by the number of frequencies employed in the analysis, up to a certain number of such spectral components, there is no need to use more wavelengths than necessary to obtain the desired limit. There is clearly an impact on cost, complexity and time to analyse when more wavelengths are employed. However, in the presented case, it was useful to include another wavelength. The result of a three-wavelength optimisation exercise is shown in Figure 9b for an aged slatted concrete floor. As compared to Figure 9a, a clear improvement was reached. It was concluded that a set of three distinct wavelengths suffice to obtain an acceptable 5.6% misclassification level for all surface samples that were available for this study.

Sensor design

The sensor that was used in tests for the invention is pixel based: each pixel is classified either as "clean" or "dirty". The classification procedure is Bayesian discriminant analysis, which assigns pixel measurements to classes from which they are most likely to have been produced. The method relies on adequate knowledge of the statistics of the possible classifications, in this work the measurements presented above form the basis of the discriminator.

The spectrographic characteristics of pig house surfaces provide much more data than is expected from the camera based sensor. The camera sensor provides a small number of channels, each described by the pair of filter/ illumination characteristics for the respective channel. In the design presented here, each channel is restricted to a narrow band of frequencies, produced, for example, by a number of powerful light emitting diodes. The sensor collects images corresponding to each channel in turn, by sequencing through the light sources for each channel. By synchronising the light sources to the camera's frame rate, a set of images corresponding to a single two dimensional measurement can be acquired in a relatively short time.

From the spectra presented above, a number of wavelengths were selected such that classification into clean and dirty classes for pig house surface materials was possible. While some materials may be amenable to classification based on a single light colour - consider, for example, the green plastic in Figure 2d at around 490 nm or 620 nm - concrete, the most important material, is clearly not. However, as illustrated previously, multi-dimensional analysis can reveal structure that is sufficient to discriminate classes.

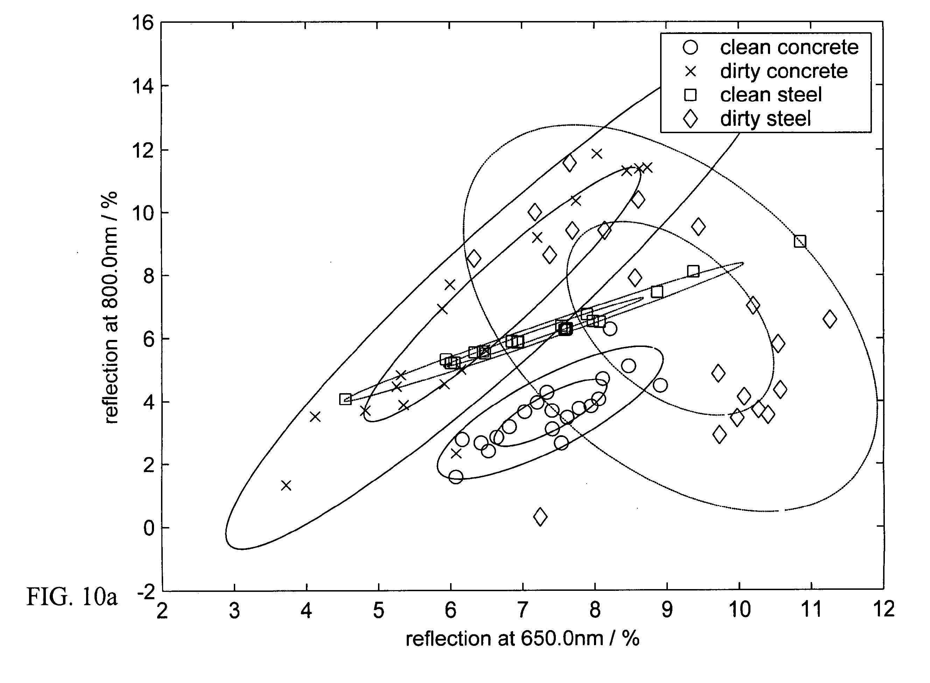

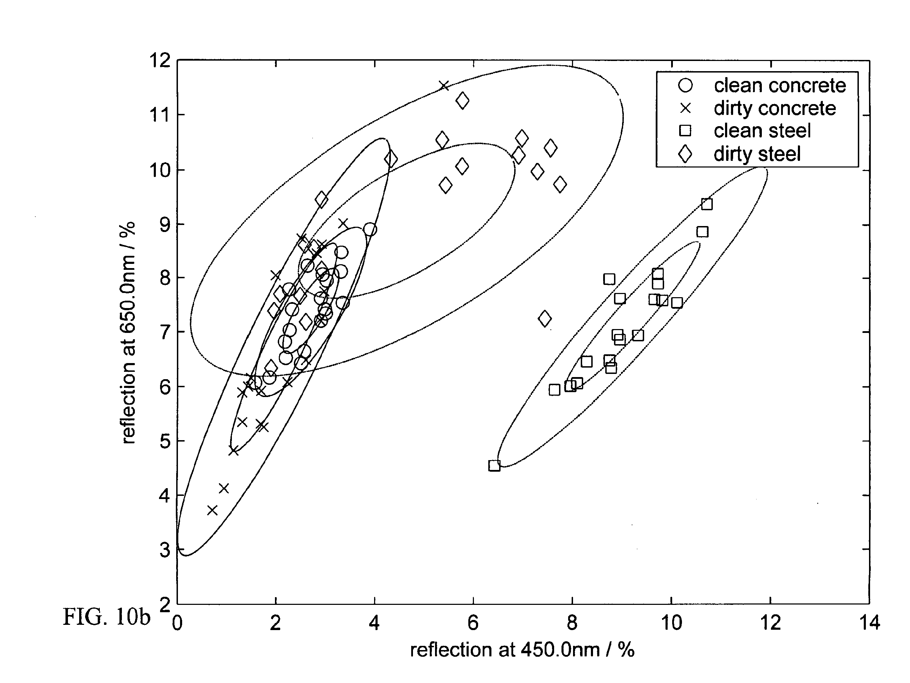

Selecting the wavelengths 800 nm and 650 nm, for example, the surface characteristics can be illustrated in the scatter plot shown in Figure 10a. Four populations are shown, corresponding to wet concrete and steel, in both clean and dirty conditions. As can be seen, with these wavelengths, clean and dirty concrete are well separated, whereas clean and dirty steel share a significant overlap. Selecting 650 nm and 450 nm on the other hand, as shown in Figure 10b, separates clean from dirty steel, but fails for concrete. Using all three wavelengths, a discriminator can be constructed to handle both material types.

From the training data and the choice of wavelengths determined as just described, a number of populations $\pi_i$ are modelled as normally distributed, multidimensional random variables.

$$\pi_i \leftrightarrow N(\mu_i, \Sigma_i)$$

Using the experimental data, $x_{ij}$, for each class i, estimates of the mean vectors and variance-covariance matrices for each population can be derived.

$$\hat{\mu}_i = \frac{1}{n} \sum_j x_{ij}$$

$$\hat{\Sigma}_i = \frac{1}{n-1} \sum_j (x_{ij} - \hat{\mu}_i)(x_{ij} - \hat{\mu}_i)'$$

A Bayesian classifier assigns new measurements to the population from which the measurement is most likely to be associated. Bayes' rule states that the probability that a measurement x is associated with the class $\pi_i$ is given by

$$P(\pi_i \mid x) = \frac{P(\pi_i)P(x \mid \pi_i)}{P(x)}.$$

A Bayesian classifier assigns a measurement to the class for which probability calculated in the equation above is highest. The term $P(x \mid \pi_i)$ is simply the probability distribution function for class i, which can be written $f_i(x)$, and $P(\pi_i)$ is the prior probability of class i, which can written $p_i$. The denominator $P(x)$ is independent of the class, and is therefore irrelevant with respect to maximising the equation across classes. Thus, a Bayesian classifier chooses the class maximising

$$S_i = f_i(x)\, p_i$$

where $S_i$ is referred to as a *discriminant value* or *score.* The term $p_i$ is the *a priori* probability of a measurement corresponding to the population $\pi_i$, and reflects knowledge of the environment prior to the measurement being taken.
In the case of multi-dimensional normal classes, the probability density is given by

$$f_i(x) = \frac{1}{\sqrt{2\pi}^n} \frac{1}{\sqrt{\det \hat{\Sigma}_i}}\, e^{-\frac{1}{2}(x-\hat{\mu}_i)'\hat{\Sigma}_i^{-1}(x-\hat{\mu}_i)}.$$

Substituting this into the upper equation for $S_i$ yields the discriminant value for the normally distributed case. In practise, the same decision rule is achieved by applying a monotonic transformation of $S_i$, so that

$$S_i(x) = \log \frac{p_i}{\sqrt{\det \hat{\Sigma}_i}} - \frac{1}{2}(x - \hat{\mu}_i)'\hat{\Sigma}_i^{-1}(x - \hat{\mu}_i)$$

is minimised instead. Since this function is quadratic in x, it is known as a quadratic discriminant function.
The JM distance measure has all of the features needed for this application, including: ability to handle signals with dissimilar distributions; analytic upper and lower bounds exist for the misclassification probability; this distance measure is symmetric in its variables. However, other measures of distance or divergence between stochastic variables could be used as well.
In connection with the invention, a computer program has been developed to perform the determination, automatically, whether a region is contaminated or not. This has been used as part of the integration of the invention in a cleaning robot.
A data flow diagram for a program illustrates the main flows of data, under normal program operation, between program inputs, outputs, processes and data stores. Two common notations exist for these diagrams, Gane and Sarson's and Yourdon and Coad's. The two notations are rather similar, using slightly different symbols for the four elements:

1. Processes
2. Datastores
3. Dataflow
4. External entities

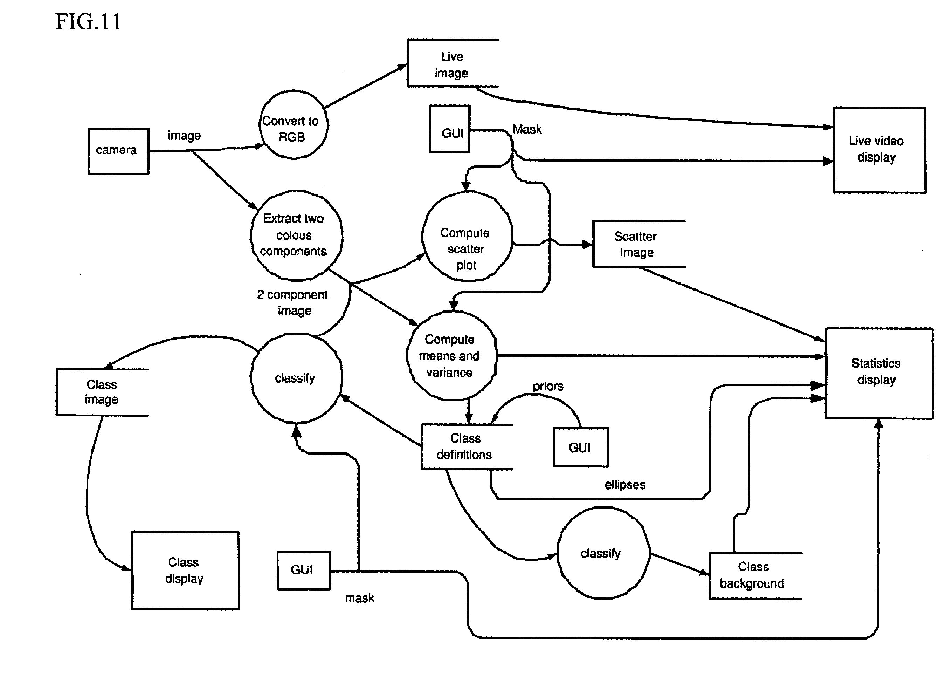

A data flow diagram for this program, mostly following Yourdon and Coad, is shown in Figure 11. As much as possible, flow runs from top left to bottom right. Inputs and outputs are shown with rectangular boxes—the main input to this program is the video camera which is shown top left. Three outputs are shown—the three image displays showing live video, statistics and classified pixels. Within the diagram, further input is obtained from the user (GUI—graphical user interface). Processes are shown with circles. A process represents a computation on, or transformation of, data. Data stores are shown as open rectangles and represent program state. Data flows are drawn with directed arcs.

Two types of data store are used, one for storing class definitions across program runs, and one for storing generated images during program operation. Whether or not these intermediate images should be represented as data stores or simply as data flows is perhaps a matter of taste—data flow diagrams are not an exact science. The reason for choosing data stores for these is to reflect the fact that this is how computer display systems usually work—complex images are stored so that displays can be asynchronously updated, for example, when a window is moved and a previously hidden area must be redrawn.

Several paths through the data flow chart can be readily identified. Starting at the top left, for example, and continuing to the right, the flow *camera → convert to RGB → live image → live video display* can be traced. Here, *camera and live video display* are external devices, *convert to RGB* a process and *live image* a data store. This path is responsible for updating the live video display window with new data from the camera.

Three paths start with GUI at top center, with the dataflow labelled *mask.* This is a circular area the user can manipulate drawn over the live video, to select a subset of the live pixels. One path leads directly to *live video display,* where the mask itself is drawn as a dotted outline. The two remaining paths lead ultimately to the *statistics display.* One path provides input to the scatter plot generator, the other to the means and variance computation — in both cases providing information about which pixels should be considered. The main algorithm of the program, describing the processing steps following the capture of a new image through to display update can be described as follows.

Given:

1. A list of classes, $c_k = (\mu_k, \Sigma_k, p_k)$, with mean vectors, variance-covariance matrices and prior probability, respectively, describing the various surface materials in clean and dirty conditions.

Repeat:

1. Read a new image from camera:

$$X = \begin{bmatrix} x_{11} & & \\ & \ddots & \\ & & x_{hw} \end{bmatrix}.$$

2. Calculate, for each pixel $x_{ij}$ and class $c_q$,

$$S_{ijq} = \frac{p_q}{\sqrt{\det \Sigma_q}} e^{-\frac{1}{2}(x_{ij}-\mu_q)'\Sigma_q^{-1}(x_{ij}-\mu_q)}.$$

Update pixel classifications as

$$Y = \begin{bmatrix} y_{11} & & \\ & \ddots & \\ & & y_{hw} \end{bmatrix}$$

choosing $y_{ij} = c_k$ such that

$$S_{ijk} = \max_q S_{ijq}.$$

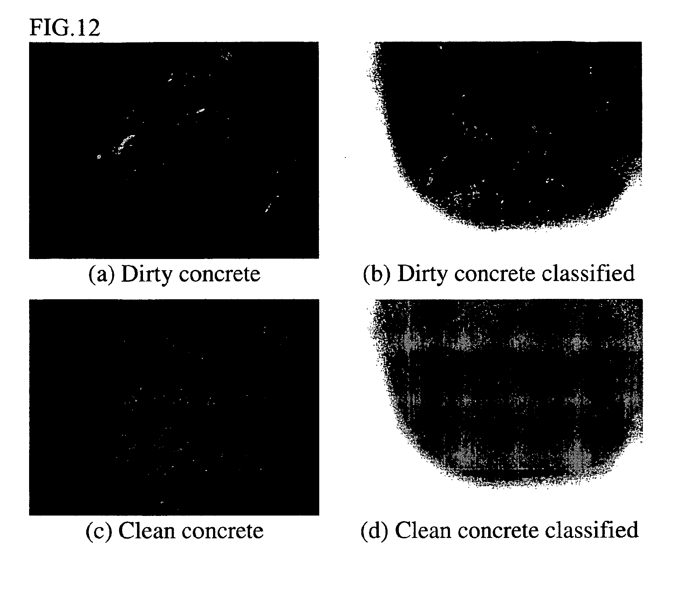

Figure 12 shows results of the algorithm used on images from a pig pen.

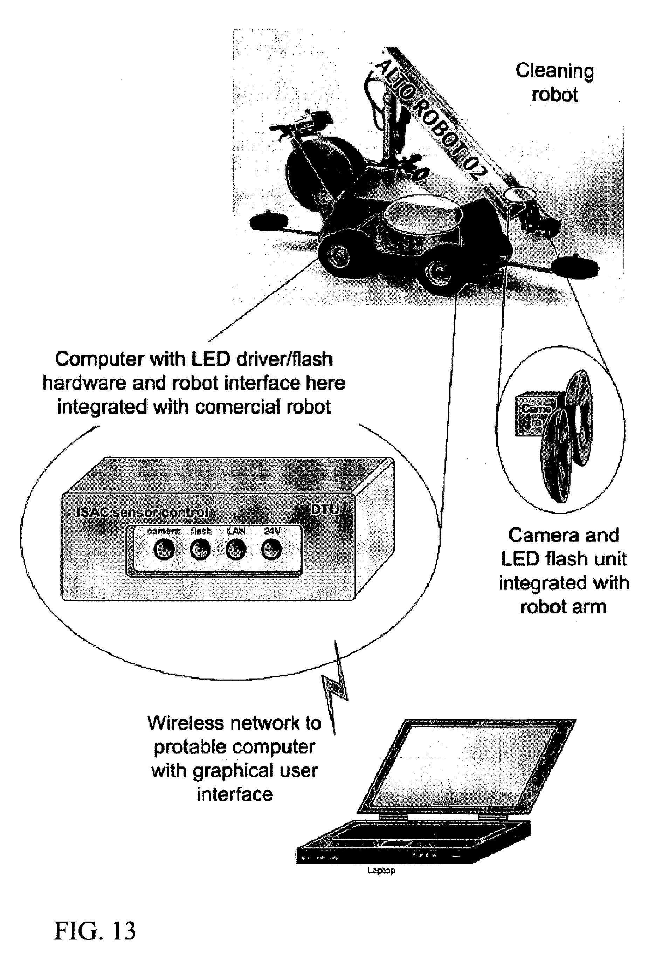

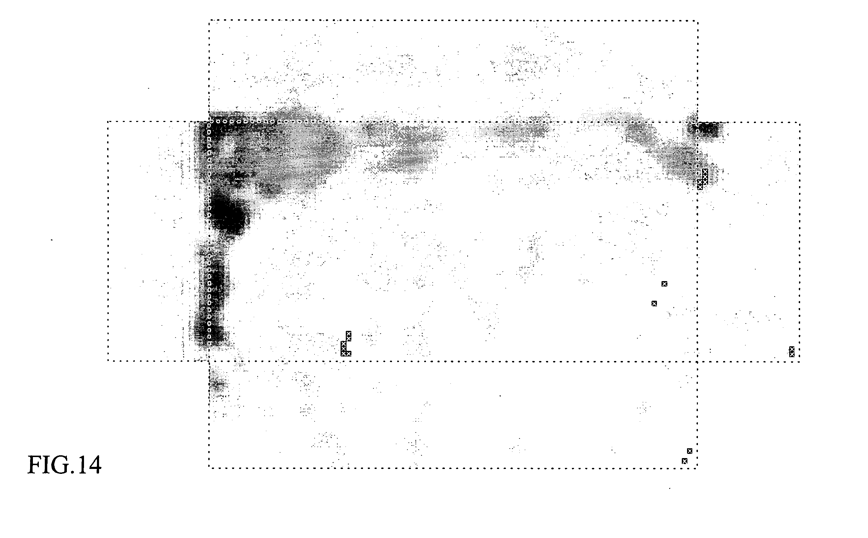

Figure 13 illustrates how the components of the sensor system are mounted on a commercial cleaning robot. The camera and lighting are mounted on the robot arm in a dedicated enclosure protecting these from first and humidity. Signals from the camera are fed to the central processing unit (computer) that comprises the classification software. Results of the classification are used to form a cleanness map, shown in Figure 14, which is subsequently used to guide the robot-based cleaning. The computer has the ability to communicate with an operator station (graphical user interface) via a wireless connection. The connection between the computer and camera could be wired or be wireless. Signals from the camera are received by a frame grabber in the computer but other configurations could be used as well. Analysis of the images captured on the CCD chip could, for example, be treated locally within the camera before they are sent to the classifier software.

The cleanness map as illustrated in Figure 14 is depicting the degree of cleanness of the four walls (side parts of image) and the floor (central part of image) in a pig pen. The degree of contamination is indicated by the level of grey where black means 100% of 2x2 mm pixels in a 10x10 cm area were classified as dirty.

The vision system produces a map of cleanness for surfaces inspected. The map is represented in a database with data indicative for the location and the corresponding cleanness. Figure 14 shows a grey-scale visual impression of the results. Present and antecedent data are compared for all area elements. This comparison may indicate that special treatment is required, which might include manual inspection. Such segments are indicated in the map and shown as white x'es on a black background in Figure 14.

This map is subsequently used to determine cleaning patterns and associated motion of robot joints and the cleaning device to perform the cleaning. In one implementation, the cleaning device is a high-pressure nozzle spraying water with possible additives to remove dirt.

**Claims**

1.  Method for optically determining whether a region of a surface is clean or contaminated, the method comprising the steps of

    - selecting a first and a second, different narrow band of wavelengths for illuminating the region,
    - selecting a first class with two-dimensional values [X1, Y1] that corresponds to a definition as clean for the region and a disjunct second class with two-dimensional values [X2, Y2] that corresponds to a definition as contaminated for the region, where X1 and X2 are values for the reflectance from the region at the first band, and Y1 and Y2 are values for the reflectance from the region at the second band,
    - illuminating the region with light having the first narrow band of wavelengths and illuminating the region with light having the second narrow band of wavelengths,
    - measuring the reflected light from the region at the first and the second band to determine the respective reflectance values R1 and R2,
    - assigning the two-dimensional value [R1, R2] to the first class, if there exist a value [X1, Y1] that is equal to [R1, R2] and assign the two-dimensional value [R1, R2] to the second class, if there exist a value [X2, Y2] that is equal to [R1, R2].

2.  Method according to claim 1 comprising image acquisition with an optoelectronic system of the surface that contains the region and subsequent image processing, where the image of the surface is acquired in sections, where the image section is divided into a multiplicity of pixels forming an image matrix and each pixel is assigned a signal value representative for the reflected light from the corresponding region.

3.  A method according to claim 1 or 2, wherein the selection of the two-dimensional values for the first and the second class involves determining a probability density X for the reflectance from the region at the first band and a probability density Y for the reflectance from the region at the second band, and in a two-dimensional representation with the reflectance values of X and Y as entrances, respectively, selecting a border between two groups of entrances, where one group is representative for a clean region and the other group is representative for a contaminated region.

4. A method according to any preceding claim, wherein the selection of the first and the second band of wavelengths involves calculation of the Jeffreys-Matusita distance for reflectance probabilities for a range of first wavelength bands and a range of second wavelength bands and selecting a combination of the first and the second wavelength bands for which the Jeffreys-Matusita distance is above a predetermined value, preferably above 0.8.

5. A method according to any preceding claim, comprising calculating a misclassification error bound for reflectance probabilities for a range of first wavelength bands and a range of second wavelength bands and selecting a combination of the first and the second wavelength bands for which the misclassification error bound is below a predetermined value, the misclassification error bound a value of one minus half the Jeffreys-Matusita distance squared, $1-\frac{1}{2}\cdot JM^2$.

6. A method according to any preceding claim, comprising selecting a third narrow wavelength band, selecting a first class with three-dimensional values [X1, Y1, Z1] which corresponds to a clean region and a second class with three-dimensional values [X2, Y2, Z2] which corresponds to a contaminated region, where Z1 and Z2 are values for the reflectance from the region at the third band,

   - illuminating the region in addition with light having the third band,
   - measuring in addition the reflected light from the region at the third band to determine the respective reflectance R3,
   - assign a three-dimensional value [R1, R2, R3] to the first class, if there exist a value [X1, Y1, Z1] that equals [R1, R2, R3], and assign the three dimensional value [R1, R2, R3] to the second class, if there exist a value [X2, Y2, Z2] that equals [R1, R2, R3].

7. A method according to any preceding claim, wherein the first band is around 800 nm and the second band is around 650 nm in order to determine the cleanliness of concrete, or the first band is around 650 nm and the second band around 450 nm in order to determine the cleanliness of steel.

8. A method according to any preceding claim, wherein the method comprises inspecting a surface for the cleaning process, producing a cleanness map for the surfaces with data indicative for the degree of cleanness in dependence of the location.

9. A method according to claim 8, wherein the method comprises automatically evaluating the degree of cleanness in relation to predetermined criteria and indicating on the cleanness map the location, where the found degree of cleanness does not correspond to the predetermined criteria.

10. A method according to any preceding claim, wherein the method comprises cleaning of animal houses.

11. An apparatus for performing the method according to any preceding claim comprising an illuminator for illumination with the first wavelength and the second wavelength, a digital video camera electronically coupled to a computer for measuring the reflected light with a spatial resolution, the camera being arranged to detect the reflected light under conditions minimising the direct reflection from the surface of the region.

12. A cleaning robot for performing the method according to claims 1-10 or comprising an apparatus according to claim 11, wherein the cleaning robot comprises a vehicle onto which at least one robot arm is mounted, and wherein an illuminator for illuminating the region with light having the first narrow band of wavelengths and illuminating the region with light having the second narrow band of wavelengths is mounted on a robot arm and wherein a camera for measuring the reflected light from the region at the first and the second band is mounted on a robot arm.

FIG. 1

FIG. 2a PRIOR ART – Concrete

FIG. 2b PRIOR ART – Steel

FIG. 2c  PRIOR ART – Brown wood

FIG. 2d  PRIOR ART – Green plastic

FIG. 3a  PRIOR ART – Concrete

FIG. 3b  PRIOR ART – Steel

FIG. 3c  PRIOR ART – Brown wood

FIG. 3d  PRIOR ART – Green plastic

probability density obtained at two wavelengths

FIG. 4

EP 1 677 099 A1

Two dimensional distributions for clean and dirty

FIG. 5    reflectance 650 nm

reflectance 790 nm

probability density

FIG. 6

Upper bound for misclassification probability

FIG. 7

EP 1 677 099 A1

Min Pmax = 0.035 at (720, 660) nm

FIG. 8

EP 1 677 099 A1

Min Pmax = 0.157 at (700, 660) nm

FIG. 9a

FIG. 9b

FIG. 10a

EP 1 677 099 A1

FIG. 10b

reflection at 450.0nm / %

reflection at 650.0nm / %

Legend:
- ○ clean concrete
- × dirty concrete
- □ clean steel
- ◇ dirty steel

# FIG.11

EP 1 677 099 A1

## FIG.12

(a) Dirty concrete

(b) Dirty concrete classified

(c) Clean concrete

(d) Clean concrete classified

FIG. 13

FIG.14

**European Patent Office**

## EUROPEAN SEARCH REPORT

Application Number

EP 04 03 1021

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 008, no. 010 (P-248), 18 January 1984 (1984-01-18) & JP 58 172504 A (KAWASAKI SEITETSU KK), 11 October 1983 (1983-10-11) * abstract; figure 1 * | 1-12 | G01N21/94 |
| A | US 6 587 575 B1 (WINDHAM WILLIAM R ET AL) 1 July 2003 (2003-07-01) * figure 6 * | 1-12 | |
| A | DRUY MARK A ET AL: "Fiber optic non-contact reflectance probe for detection of contamination in pharmaceutical mixing vessels" PROC SPIE INT SOC OPT ENG; PROCEEDINGS OF SPIE - THE INTERNATIONAL SOCIETY FOR OPTICAL ENGINEERING 1999 SOCIETY OF PHOTO-OPTICAL INSTRUMENTATION ENGINEERS, BELLINGHAM, WA, USA, vol. 3538, 3 November 1998 (1998-11-03), pages 167-171, XP002323234 * figures 2,3 * | 1-12 | |
| A | LUDOWISE P D ET AL: "PPLN laser-based system for chemical imaging" PROC SPIE INT SOC OPT ENG; PROCEEDINGS OF SPIE - THE INTERNATIONAL SOCIETY FOR OPTICAL ENGINEERING 1999 SOCIETY OF PHOTO-OPTICAL INSTRUMENTATION ENGINEERS, BELLINGHAM, WA, USA, vol. 3753, 1999, pages 51-60, XP002323235 * figures 7,8 * | 1-12 | TECHNICAL FIELDS SEARCHED (Int.Cl.7) G01N |

-/--

The present search report has been drawn up for all claims

| Place of search | Date of completion of the search | Examiner |
|---|---|---|
| Munich | 5 April 2005 | Mason, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 04 03 1021

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WINDHAM W R ET AL: "Analysis of reflectance spectra from hyperspectral images of poultry carcasses for fecal and ingesta detection" PROCEEDINGS OF THE SPIE - THE INTERNATIONAL SOCIETY FOR OPTICAL ENGINEERING SPIE-INT. SOC. OPT. ENG USA, vol. 4816, 8 July 2002 (2002-07-08), - 10 July 2002 (2002-07-10) pages 317-324, XP002323236 ISSN: 0277-786X * figures 1-3 * | 1-12 | |
| A | PATENT ABSTRACTS OF JAPAN vol. 012, no. 280 (P-739), 2 August 1988 (1988-08-02) & JP 63 061151 A (SHIKOKU ELECTRIC POWER CO INC), 17 March 1988 (1988-03-17) * abstract; figure 1 * | 1-12 | |
| A | WO 2004/061438 A (THE BOEING COMPANY) 22 July 2004 (2004-07-22) * figures 1-3 * | 1-12 | TECHNICAL FIELDS SEARCHED (Int.Cl.7) |
| A | US 6 446 302 B1 (KASPER GARY A ET AL) 10 September 2002 (2002-09-10) * figure 2 * | 1-12 | |

The present search report has been drawn up for all claims

| Place of search | Date of completion of the search | Examiner |
|---|---|---|
| Munich | 5 April 2005 | Mason, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 677 099 A1**

## ANNEX TO THE EUROPEAN SEARCH REPORT
## ON EUROPEAN PATENT APPLICATION NO.

EP 04 03 1021

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2005

| Patent document cited in search report | | Publication date | Patent family member(s) | | Publication date |
|---|---|---|---|---|---|
| JP 58172504 | A | 11-10-1983 | NONE | | |
| US 6587575 | B1 | 01-07-2003 | CA | 2437876 A1 | 22-08-2002 |
| | | | EP | 1366460 A2 | 03-12-2003 |
| | | | WO | 02063939 A2 | 22-08-2002 |
| JP 63061151 | A | 17-03-1988 | JP | 1772269 C | 14-07-1993 |
| | | | JP | 4066313 B | 22-10-1992 |
| WO 2004061438 | A | 22-07-2004 | US | 2003232448 A1 | 18-12-2003 |
| | | | WO | 2004061438 A1 | 22-07-2004 |
| US 6446302 | B1 | 10-09-2002 | US | 2002083548 A1 | 04-07-2002 |
| | | | US | 2002174507 A1 | 28-11-2002 |

EPO FORM P0459

For more details about this annex : see Official Journal of the European Patent Office, No. 12/82